# EUROPÄISCHE PATENTSCHRIFT

(11) **EP 1 215 477 B1**
(45) Veröffentlichungstag und Bekanntmachung des Hinweises auf die Patenterteilung: **13.02.2008**
(21) Anmeldenummer: 01129644.9
(22) Anmeldetag: 12.12.2001
(51) Int. Cl.: G01L 5/20, G01L 9/00, G01L 19/14

(54) **Temperaturkompensierter Drucksensor**
Temperature compensated pressure sensor
Capteur de pression à compensation de température

(30) Priorität: 13.12.2000 DE 10062019; 29.06.2001 DE 10131688
(43) Veröffentlichungstag der Anmeldung: 19.06.2002
(73) Patentinhaber: Trafag AG, 8708 Männedorf (CH)
(72) Erfinder: Häberli,Roman, 8712 Stäfa (CH); Zeisel,Dieter, 8127 Forch (CH)
(74) Vertreter: Kastel, Stefan

(56) Entgegenhaltungen:
- DE-A- 1 933 363
- DE-A- 3 534 608
- US-A- 4 034 610
- US-A- 5 412 992

## Beschreibung

Die Erfindung betrifft einen Drucksensor mit einer an einem ortsfesten Stützelement abgestützten druckaufnehmenden Membran, einem sich mit der Auslenkung des Auslenkbereichs verbiegenden Biegeelement, dessen Verbiegung in ein verarbeitbares Signal umwandelbar ist, und einem Temperaturausgleichselement über welches das Biegeelement mit dem die druckaufnehmende Membran abstützenden Stützelement verbunden ist. Ein solcher Drucksensor ist aus der DE 19 33 363 A1 bekannt geworden, auf die weiter unten noch näher eingegangen wird.

Aus der US 35 90 638 ist ein auf Temperaturänderungen angeblich unempfindlicher Drucksensor bekannt. Dieser umfasst eine bimetallische Membran, deren Auslenkung erfasst und zur Steuerung eines Thermoelementes verwendet wird. Dieses stellt die Temperatur der Bimetallmembran so ein, dass die ursprüngliche Referenzlage wie vor der Druckbeaufschlagung wiederhergestellt ist. Die hierzu notwendige Temperatur wird gemessen und gibt ein Maß für den Druck an.

Aus der EP 0 531 696 A1 ist ein Drucksensor bekannt, bei dem die Auslenkung einer Membran über einen Stößel auf einen als Biegebalken ausgebildeten Kraftsensor übertragen wird, dessen Auslenkung mittels Dehnmessstreifen erfasst werden. Eine Temperaturkompensation ist dabei aber nicht angesprochen.

Die DE 35 34 608 A betrifft einen Drucksensor mit Überlastschutz. In einer Ausführungsform wird die Auslenkung der Membran nicht durch einen Druckstößel, sondern durch eine Zugstange übertragen. In Ruhelage ist das Biegeelement durch die Zugstange vorgespannt. Bei Auslenkung der Membran wird diese Vorspannung entlastet und die Entlastung gemessen. In alternativen Ausführungsformen ist anstelle eines Übertragungsstößels eine elastisches Element eingesetzt. Eine Temperaturkompensation ist nicht angesprochen. Auch ist das Biegeelement fest mit dem Gehäuse verbunden, so dass es keinen Temperaturausgleich zwischen dem Biegeelement und der ebenfalls fest an dem Gehäuse festgelegten Membran gibt.

Aus der DE 12 52 439 ist ebenfalls ein Drucksensor mit einer Membran, einem Kraftstößel und einem Biegebalken bekannt. Bei diesem bekannten Drucksensor sollen Messfehler durch Beschleunigungen und durch aufgrund von Temperaturveränderungen sich einstellende Längenänderungen des Biegebalkens dadurch ausgeschaltet werden, dass
a) sich der Biegebalken über die Lagerpunkte hinaus erstreckt und mit Gegengewichten versehen ist,
b) der Biegebalken an den Lagerpunkten auf sich senkrecht zur Längsrichtung des Biegebalkens und der Membran erstreckenden Blattfedern gehalten ist und
c) zusätzlich Blattfedern zur seitlichen Stützung der Krafteinleitstelle am Biegebalken gegen Verdrehung vorgesehen sind.

Aus der DE 30 48 402 A1 ist ein Drucksensor mit zwei Membranen bekannt. Dehnungsmessstreifen sind direkt auf jede Membran derart aufgebracht, dass bei einer Membran nur die Umfangsspannung, bei der anderen Membran nur die Durchbiegung gemessen wird. Eine Temperaturkompensation findet über ein zusätzliches Bimetallelement im Inneren und/oder durch die Elektronik statt.

Die DE 42 34 237 C2 betrifft keinen Drucksensor, sondern sozusagen das Gegenteil, nämlich einen Mikroaktor. Bei diesem wird die Kraft durch ein Kraftelement, das sich betätigbar in seiner Länge ändert, auf einen Biegebalken übertragen. Eine durch Temperaturschwankungen verursachte unterschiedliche Ausdehnung des Kraftelements und des Biegeelements wird durch mindestens ein Temperaturkompensationselement, das ebenfalls aus dem Biegebalken oder alternativ auf einem zweiten parallel betriebenen Biegebalken angeordnet ist, kompensiert. Es ist auch angesprochen, den Mikroaktor für resonante Drucksensoren zu verwenden. Dann wird das Kompensationselement als Abgriff für das Sensorsignal verwendet. Schließlich ist auch eine Mehrfachanordnung von Membranen angesprochen, diese werden aber anstelle des Biegebalkens als Biegeelement verwendet, wobei eine Membran das Kraftelement und eine zweite Membran das Kompensationselement trägt.

Aus der DE-PS 688 097 ist eine mechanische Druckdose mit einer Doppelmembran bekannt. Die Doppelmembran umschließt ein Flüssigkeitsvolumen, das die mit dem zu messenden Medium in Kontakt stehende erste Membran mechanisch von der als Betätigungselement für einen Zeiger dienenden zweiten Membran abkoppelt. Eine Temperaturkompensation ist bei diesem bekannten "Drucksensor" dadurch gegeben, dass das Flüssigkeitsvolumen durch den Einsatz eines Zwischenstücks mit engen Flüssigkeitskanälen in den Raum zwischen die Membrane klein gehalten wird gegenüber dem Volumen des Zwischenstücks bzw. des sonstigen festen Materials. Zusätzlich ist das Zwischenstück und der Gehäuseaußenmantel getrennt voneinander ausgeführt, wobei der Wärmeausdehnungskoeffizient des Gehäuseaußenmantels größer ist als der des Zwischenstücks.

Eine vergleichbare Art einer Flüssigkeitsabkopplung zwischen der Druckmembran und einer als Druckwandler eingesetzten zweiten Membran ist auch aus der JP 11 094671 A bekannt. Diese betrifft einen temperaturkompensierten Drucksensor zur Messung von Drücken in unterschiedlich temperierten Medien. Um die Temperaturkompensation zu erzielen, ist der Druckwandler thermisch isoliert. Zudem wird der Druck über ein Flüssigkeitsgehäuse mit darin abgedichteter Flüssigkeit und der Druckmembran zwischen der Flüssigkeit und dem zu messenden Medium auf den Druckwandler übertragen. Dieser Flüssigkeitskörper hat zwei unterschiedlich sich bei Wärme ausdehnende Teilkörper, die eine Ausdehnung der Flüssigkeit aufgrund einer Temperaturänderung kompensieren.

Die US 4 061 035 beschreibt eine Membrananordnung für unter Temperaturstößen (z. B. in Motorbrennräumen) arbeitenden Drucksensoren. Diese besondere Anordnung soll zum Schutz vor Temperaturstößen dienen. Hierzu ist die Membran ringförmig ausgebildet, wobei ein äußerer Stützring fest mit dem Sensorgehäuse und der Mittelteil der Membran fest auf ein Kraftmesselement vorgespannt ist. Die Vorspannung erfolgt über einen Bolzen, der an seinem anderen Ende einen Einstellring für die Vorspannung trägt. Der Einstellring greift über ein Temperaturkompensationselement an dem Sensorgehäuse an. Hier wirkt eine Temperaturkompensation also über die Vorspannschraube, die die Membran gegen das Kraftmesselement vorspannt.

Die DE 43 19 196 A1 betrifft einen Drucksensor, bei dem die Auslenkung einer Membran über einen Druckstempel auf einen Druckwandler übertragen wird. Eine Kompensierung von Thermoschockfehlern soll durch eine konstruktive Abstimmung der Form eines die Membran haltenden Gehäuseringes und der Tiefe einer Sicke in der Membran im Bereich des Druckstempels erzielt werden.

Die DE 198 32 681 A1 beschreibt einen Drucksensor mit einer Membran, auf welcher eine rotationssymmetrisch angeordnete DMS-Brücke aufgebracht ist. Über die DMS ist zur Temperaturkompensation eine Kunststoffscheibe mit gleicher thermischer Dehnung wie die Membran gelegt. Die Dehnung wird somit hauptsächlich durch die Verbiegung der Kunststoffscheibe bestimmt. Damit soll laut der DE 198 32 681 A1 ein Drucksensor mit einer linearen Kennlinie erhalten werden.

Die EP 0 548 043 A2 betrifft eine besondere Anordnung eines temperaturkompensierten Drucksensors. Bei ihm ist die Druckmembran in ganz besonderer Anordnung, nämlich durch zwei konzentrisch zueinander angeordnete zylindrische Membranteile mit unterschiedlichen Durchmessern gebildet. Genauer ist das Membranelement durch einen im Profil U-profilförmigen Rotationskörper gebildet. Bei Druckerhöhung wird dieser Rotationskörper zusammengedrückt, was einer Durchmessererhöhung der inneren zylindrischen Membranwand und einer Durchmessererniedrigung der äußeren zylindrischen Membranwand entspricht. Eine Temperaturkompensation ist bei einer solchen Anordnung deswegen erzielbar, weil sich die beiden Membranteile bei einer Temperaturänderung gleichsinnig ändern. Da das Drucksignal durch eine Überlagerung eines Signals von beiden Membranteilen erhalten wird, heben sich die Ausdehnungen hierdurch annähernd auf.

In der DE 40 23 420 A1 ist ein wiederum nach dem Prinzip einer Übertragung einer Membranauslenkung auf ein Kraftmesselement, das auch in Form eines Balkens vorliegen kann, arbeitender Drucksensor beschrieben. Eine Temperaturkompensation ist nicht angesprochen.

Die EP 0 156 081 B1 sowie die eingangs erwähnte, den Oberbegriff des beigefügten Anspruchs 1 bildende DE 19 33 363 A1 beschreiben eine weitere Art, einen Drucksensor temperaturkompensiert auszubilden. Die Temperaturkompensation erfolgt bei beiden aus diesen Druckschriften bekannten Drucksensoren mittels besonderer Auslegung der die Membranauslenkung übertragenden Stößel. Hierzu ist neben dem Stößel noch ein weiteres längliches Element als Temperaturausgleichselement vorgesehen, das sich in seiner Temperaturausdehnung komplementär zu dem Stößel verhält und den Druckwandler, auf den die Auslenkung übertragen wird, in stets gleichem Abstand zu der Membran wie der Stößel hält. Als Druckwandler d. h. Biegeelement werden hier ebenfalls Membrane mit direkt darauf angebrachten DMS verwendet. Aus der DE 19 33 363 A1 ist somit bekannt, das Biegeelement (das Kraftmesselement) über ein Temperaturausgleichselement in unabhängig von der Temperatur gleichbleibenden Abstand relativ zur Membran zu positionieren.

Aufgabe der Erfindung ist es, einen Drucksensor der im Oberbegriff des Anspruchs 1 genannten und aus der DE 19 33 363 A1 bekannten Art derart zu verbessern, dass er bei geringerem Herstellungsaufwand einfach und kompakt aufbaubar ist und auch zur Druckmessung in aggressiven oder lebensmitteltechnisch rein zu haltenden Medien selbst dann geeignet ist, wenn diese großen Temperaturschwankungen unterworfen sind.

Diese Aufgabe wird durch einen Drucksensor mit den Merkmalen des Anspruchs 1 gelöst.

Vorteilhafte Ausgestaltungen der Erfindung sind Gegenstand der Unteransprüche.

Um auch chemisch aggressive oder lebensmitteltechnologisch rein zu haltende Medien messen zu können, muß man oft für die dem Medium ausgesetzten Teile des Drucksensors wie insbesondere die druckaufnehmenden Membran chemisch schlecht angreifbare Materialien wie Edelmetall oder nicht korrosive Edelstahle wählen. Solche chemisch nicht angreifbaren Materialien haben aber zum Aufbau des Biegeelements oft ungünstige Eigenschaften. Erfindungsgemäß kann das Biegeelement, also beispielsweise ein Biegebalken, aus einem hochfesten Stahl (z. B. martensitischer Stahl, WN 1.4542) aufgebaut sein, um so eine besonders starke mechanische Festigkeit und somit Langzeitstabilität zu gewährleisten. Die medienberührenden Elemente wie insbesondere die druckaufnehmende Membran besteht demgegenüber, um zum Beispiel Korrosion zu verhindern, aus einem anderen Material (z. B. austenitischer Edelstahl, WN 1.4435). Bei einer solchen Ausbildung unterscheiden sich aber in der Regel die Temperaturausdehnungskoeffizienten der beiden unterschiedlich gewählten Materialien (z. B. α = 11, 0 x 10⁻⁶ K⁻¹ für 1.4542 und α = 16, 5 x 10⁻⁶ K⁻¹, für 1.4435). Aus diesem Grunde führt bereits eine geringe Temperaturveränderung ohne Druckveränderung zur Verformung der Membran, einfach wegen der unterschiedlichen Ausdehnung der miteinander verbundenen Elemente aus unterschiedlichen Materialien. Aufgrund dieser unterschiedlichen Ausdehnung führt dies zu einer Stimulierung des Biegebalkens ohne dass ein Druck aufgebracht wird. Dieser Effekt kann für einen Temperaturunterschied von 100°C bis zu 100% des Signals bei Nenndruck ausmachen. Dies ist auch zu viel für eine sinnvolle elektronische Kompensation. Aus diesem Grunde ist erfindungsgemäß weiter vorgesehen, dass das Temperaturausgleichselement ein zumindest bereichsweise flächenhaft ausgebildeter Körper ist. Dieser Körper hat somit eine ähnliche Geometrie wie die Membran. Aufgrund der flachen Struktur lässt sich so einerseits leichter eine Kompensation einer, im Vergleich zum Biegelbalken gesehen, zu großen Wärmeausdehnung der Membran erzielen, andererseits ist der Drucksensor kompakt aufbaubar. Der Körper ist erfindungsgemäß biegesteifer als die druckaufnehmende Membran ausgebildet, einerseits um nicht durch Auslenkungen der Membran mitbewegt zu werden. Die steifere Auslegung hilft gleichzeitig, tiefe Resonanzschwingungen zu verhindern. Der als Temperaturausgleichselement wirkende zumindest bereichsweise flächenhaft ausgebildeter Körper hat ein gegenüber der druckaufnehmenden Membran vergleichbares Verformverhalten bei Temperaturänderungen. Hierzu ist er beispielsweise aus einem Material mit gleichem Temperaturausdehnungskoeffizienten wie die Membran gebildet. Aufgrund der ähnlichen Geometrie (flache Ausbildung) und des gleichen Verformverhaltens lässt sich somit eine einfache Temperaturkompensation erreichen. Wegen der flächenhaften Ausbildung des Körpers kann der Drucksensor weitaus kompakter als der Drucksensor gemäß der DE 19 33 363 A1 ausgebildet werden. Der flächenartige Körper lässt sich zum Beispiel einfach als Stanzteil, Gussteil oder Drehteil herstellen.

Im Prinzip können für das Temperaturausgleichselement in Form des flächenhaften Körpers alle Materialien verwendet werden, deren Temperaturausdehnungskoeffizient und E-Modul bekannt ist und sich mit den anderen im Drucksensor verwendeten Materialien verbinden lassen, wobei dann die Temperaturkompensation über Auswahl der Geometrie und der übrigen Materialien erfolgt. Am einfachsten und unkompliziertesten gelingt dies, wenn das Material des flächenhaften Körpers einen gleichen Temperaturausdehnungskoeffizienten wie die anderen Materialien des Drucksensors mit Ausnahme des Biegebalkens, also insbesondere wie das Material der druckaufnehmenden Membran hat.

Um die Ausdehnungseigenschaften in der gewünschten Welle einzustellen, ist der flächenhafte Körper in seinem flächenhaften Bereich mit wenigstens einer Welle versehen. Durch Dimensionierung dieser Welle oder Wellenform können verschiedene Ausdehnungen erreicht werden.

Als flächenhafter Körper können verschiedene Geometrien in Betracht kommen, dieser kann zum Beispiel auch ein einfaches Blech sein oder aus mehreren flächenhaften Streifen gebildet sein. Am einfachsten herstellbar und von der Geometrie auch leicht mit der druckaufnehmenden Membran vergleichbar ist der flächenhafte Körper in einer Ausgestaltung als zweite Membran.

Die Steifigkeit des flächenhaften Körpers hängt von seinem E-Modul und seiner Geometrie ab, d. h. insbesondere der Form einer Welle oder Wellenform und seiner Dicke. Die Ausdehnungseigenschaften hängen dagegen im wesentlichen von dem Temperaturausdehnungskoeffizienten α und der geometrischen Größe ab. Durch geschickte Variation der Geometrie lässt sich somit ein flächenhafter Körper, also beispielsweise eine Temperaturkompensationsmembran, finden, die zwar steif ist, aber sich mit der Temperatur in passender Weise ausdehnt. Zum Beispiel wird eine solche Temperaturausgleichsmembran steifer, wenn die Membrandicke (Blechdicke) erhöht wird, die Ausdehnung unter Temperatur ändert sich dabei aber kaum. Die Steifheit der Membran ist wichtig, damit keine tiefen Resonanzfrequenzen entstehen. Damit können dann auch Druckschwankungen gemessen werden, die im niederfrequenten Bereich liegen. Wenn aber Druckschwankungen im Bereich von Resonanzfrequenzen lägen, wären sie nicht messbar. Außerdem ist es vorteilhaft, wenn Resonanzfrequenzen oberhalb der Frequenzen der Elektronik liegen. Ziel ist somit eine Resonanzfrequenz von 10 - 20 kHz oder darüber. Dies lässt sich dann erreichen, wenn der flächenhafte Körper wenigstens 10 mal biegesteifer als die druckaufnehmende Membran ist.

Im Prinzip könnte man das Biegeelement, also beispielsweise einen Biegebalken oder Kraftmessbalken direkt auf den flächenhaften Körper anbringen. Einfacher wird dies durch ein zweites Stützelement, das beispielsweise durch einen auf einer Temperaturkompensationsmembran aufgebrachten Ring gebildet ist. Ein erster Randbereich des flächenhaften Körpers kann dann mit den zweiten Stützelement, das das Biegeelement trägt, fest verbunden sein. Ein zweiter Randbereich ist dann an dem auch die druckaufnehmende Membran tragenden ersten Stützelement befestigbar. Dieses erste Stützelement kann beispielsweise durch eine Fassung oder ein Gehäuse des Sensors gebildet sein.

Um eine einfache Temperaturausdehnungskompensation zu erzielen und um den Drucksensor unempfindlich gegen aggressive Materialien zu machen bzw. die zu messenden Medien vor Ablagerungen aus dem Drucksensor zu schützen, wird gemäß einer weiteren vorteilhaften Ausgestaltung der Erfindung vorgeschlagen, dass sämtliche Elemente des Drucksensors außer dem Biegeelement aus einem gleichen, gegenüber aggressiven zu messenden Medien unempfindlichen Material mit naturgemäß auch gleichen Temperaturausdehnungskoeffizienten gebildet sind. So sind beispielsweise der flächenhafte Körper, die druckaufnehmende Membran, eines oder beiden der Stützelemente und Verbindungselemente, die den Auslenkbereich der druckaufnehmenden Membran mit dem Biegeelement verbinden, aus Materialien mit gleichem Temperaturausdehnungskoeffizienten, vorzugsweise aus dem gleichen gegenüber aggressiven zu messenden Medien unempfindlichen Material gebildet. Das Biegeelement ist aus einem hinsichtlich der Biegeeigenschaften und der mechanischen Festigkeit optimierten Material mit naturgemäß demgegenüber unterschiedlichen Temperaturausdehnungskoeffizienten gebildet. Der flächenhafte Körper, die druckaufnehmende Membran, die beiden Stützelemente und die Verbindungselemente können beispielsweise aus austenitischem Edelstahl und das Biegeelement aus martensitischem und damit hochfestem Stahl bestehen. Es ist auch denkbar, dass lediglich die mit dem Medium in Berührung kommenden Materialien, das sind bei frontbündiger Ausführung des Drucksensors hauptsächlich die Membran und ggf. noch deren Stützelement, aus Titan oder einer Titanlegierung besteht oder einem solchen Titanmaterial überzogen ist. Die übrigen Elemente des Drucksensors können dann aus kostengünstigeren Materialien bestehen, wobei sich dadurch ergebende unterschiedliche Temperaturausdehnungen über den einfach herstellbaren und durch eine Welle oder dergleichen einfach einstellbaren flächenhaften Körper in besonders kompakter Bauweise ausgleichbar sind. Als Biegeelement kommt insbesondere ein Biegebalken zum Einsatz, der mit dickeren Enden zur ortsfesten Befestigung versehen ist und ein verdicktes Mittelteil aufweist, welches mit dem Auslenkbereich (d. h. in der Regel die Mitte) der druckaufnehmenden Membran zum Beispiel über einen Stößel verbunden ist. Zwischen diesem Mittelteil und den dickeren Ende ist der Biegebalken mit dünneren Biegebereichen versehen. Diese Biegebereiche sind mit Dehnmessstreifen versehen.

Die erfindungsgemäße Bauart ist insbesondere zum Bilden eines frontbündigen Drucksensors geeignet, welcher in einer das zu vermessende Medium umgebenden Wand frontbündig anordenbar ist.

Der flächenhafte Körper wird bevorzugt derart angeordnet, dass er sich - mit Ausnahme der Wellenform - in einer zu der Membran im wesentlichen parallelen Richtung erstreckt. Er ist beispielsweise durch eine im wesentlichen parallel zu der druckaufnehmenden Membran anzuordnenden Ringmembran mit Ringwelle gebildet.

Ein Ausführungsbeispiel der Erfindung wird im folgenden anhand der beigefügten Figur näher erläutert. Darin zeigt:
- Fig. 1: einen Querschnitt durch einen in Draufsicht im wesentlichen Kreisform aufweisenden temperaturkompensierten Drucksensor;
- Fig. 2: eine perspektivische Ansicht eines etwa einem Viertel entsprechenden Sektors durch den Drucksensor von Fig. 1 bei ausgelenkter Membran;
- Fig. 3: einen Graph des erwarteten (berechneten) Dehnungsverlaufs entlang des Biegebalkens für ΔT = 0°C und Nenndruck von p = 1,0 bar; und
- Fig. 4: den erwarteten (berechneten) Dehnungsverlauf entlang des Biegebalkens bei einem Temperatursprung von 100°C ohne Druck.

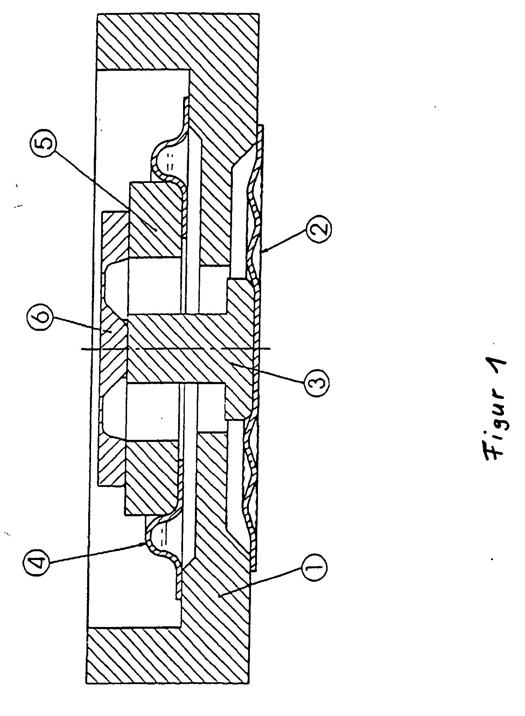

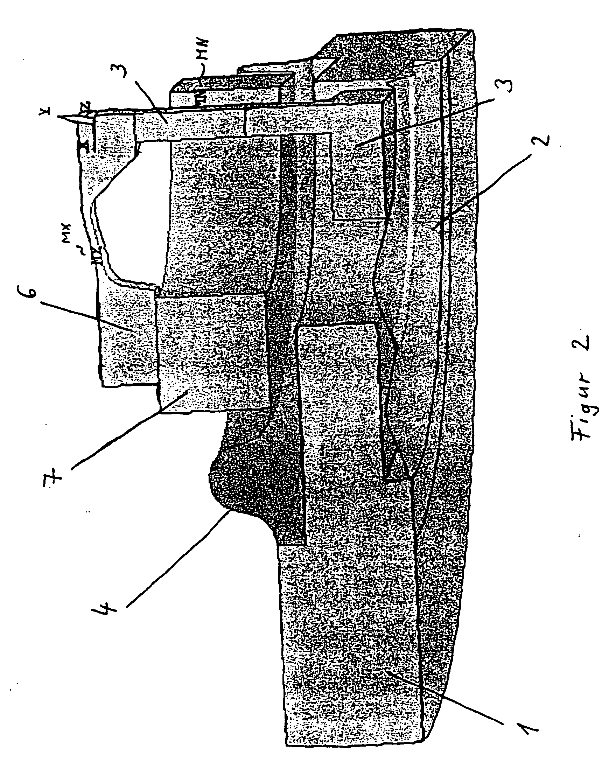

Der in den Figuren 1 und 2 gezeigte Drucksensor weist als erstes Stützelement eine äußere Fassung 1 auf, auf welcher auf der dem zu messenden Medium zuzuwendenden Seite eine druckaufnehmende Membran 2 abgestützt ist. Die mediumsberührende druckaufnehmende Membran 2 überträgt eine durch Druckbeaufschlagung erfolgende Verformung, d. h. eine Durchbiegung in ihrer als Auslenkbereich ausgebildeten Mitte mit Hilfe eines Stößels 3 auf einen als Biegeelement wirkenden Biegebalken 6.

Der Biegebalken 6 ist in seiner Mitte mit dem Stößel 3 verbunden und an seinen beiden Enden dicker ausgebildet. Zwischen der Mitte und seinem äußeren Rand, d. h. den beiden Enden befinden sich dünnere Biegebereiche, die bei Auslenkung der druckaufnehmenden Membran, die über den Stößel 3 auf die Mitte des Biegebalkens 6 übertragen wird, verbogen werden. Diese dünneren Biegebereiche des Biegebalkens 6 weisen Dehnmessstreifen auf, an denen ein die Durchbiegung angebendes Signal abgreifbar ist. Um den Biegebalken 6 ausreichend mechanisch fest zu machen, ist er aus einem hochfesten Stahl wie zum Beispiel martensistischem Edelstahl, WN 1.4542, gebildet. Die druckaufnehmende Membran 2 und die Fassung 1 sind als medienberührende Elemente aus einem anderen, weniger empfindlichen Material wie zum Beispiel austenitischem Edelstahl, WN 1.4435, gebildet. Um die sich aufgrund der unterschiedlichen Materialien ergebenden unterschiedlichen Ausdehnungen der druckaufnehmenden Membran 2 und des Biegebalkens 6 als Folge von Temperaturänderungen zu kompensieren, ist der äußere Rand des Biegebalkens 6, d. h. seine dickeren Enden, anstatt auf der Fassung 1 auf einem zweiten Stützelement in Form eines zusätzlichen Ringes 5 fixiert, der wiederum über ein Temperaturausgleichselement in Form eines flächenhaften Körpers, hier in Form einer Kompensationsmembran 4, mit der Fassung 1 verbunden, wie dies in den Figuren 1 und 2 dargestellt ist. Die Kompensationsmembran 4 ist relativ steif, so dass sie sich bei Druckbeaufschlagung auf die druckaufnehmende Membran 2 nicht bewegt, jedoch kompensiert sie die Ausdehnung der druckaufnehmenden Membran 2 als Folge einer Temperaturänderung. Hierzu ist die Kompensationsmembran 4 in dem die Fassung 1 mit dem Ring 5 verbindenden Bereich wellenförmig ausgebildet. Die Kompensationsmembran 4 ist in dem hier dargestellten Beispiel ringförmig ausgebildet ist, um in der Mitte Platz für den Stößel 3 zu lassen. Auch die Welle ist hier als Ringwelle ausgebildet. Der Stößel 3 selbst wiederum ist an seinem mit der druckaufnehmenden Membran 2 verbundenen Ende verdickt ausgebildet, dieses verdickte Ende wird auch als "Pille" bezeichnet. Es dient zum Stützen der Mitte der druckaufnehmenden Membran. Bei dem dargestellten Drucksensor bestehen folgende Elemente aus Edelstahl WN 1.4435: druckaufnehmende Membran 2, Fassung 1, Pille und gesamter Stößel 3 und Kompensationsmembran 4, mit einem Temperaturausdehnungskoeffizient α von 16,5 x 10⁻⁶ K⁻¹. Der Ring 5 und der Biegebalken 6 bestehen aus martensitischem Stahl WN 1.4542 mit einem Temperaturausdehnungskoeffizient α von 11, 0 x 10⁻⁶ K⁻¹.

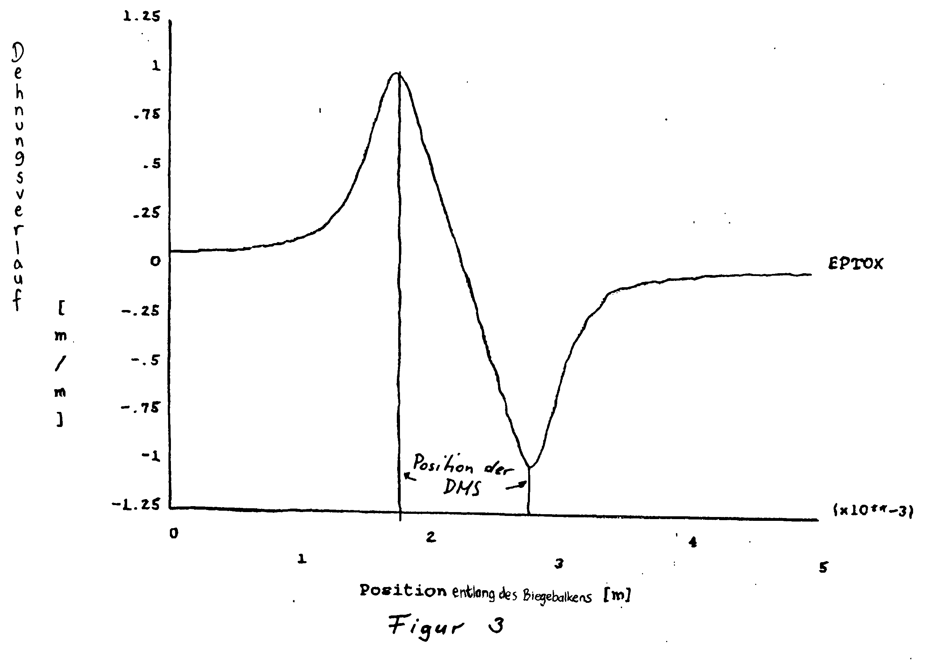

Fig. 3 zeigt den erwarteten Dehnungsverlauf entlang des Biegebalkens für einen Auslegungsfall von p = 1,0 bar. Die Position der Dehnmessstreifen (DMS) ist angegeben. Man würde ein Signal von 2, 0 x 10⁻³ Dehnung erwarten (Differenz der beiden DMS).

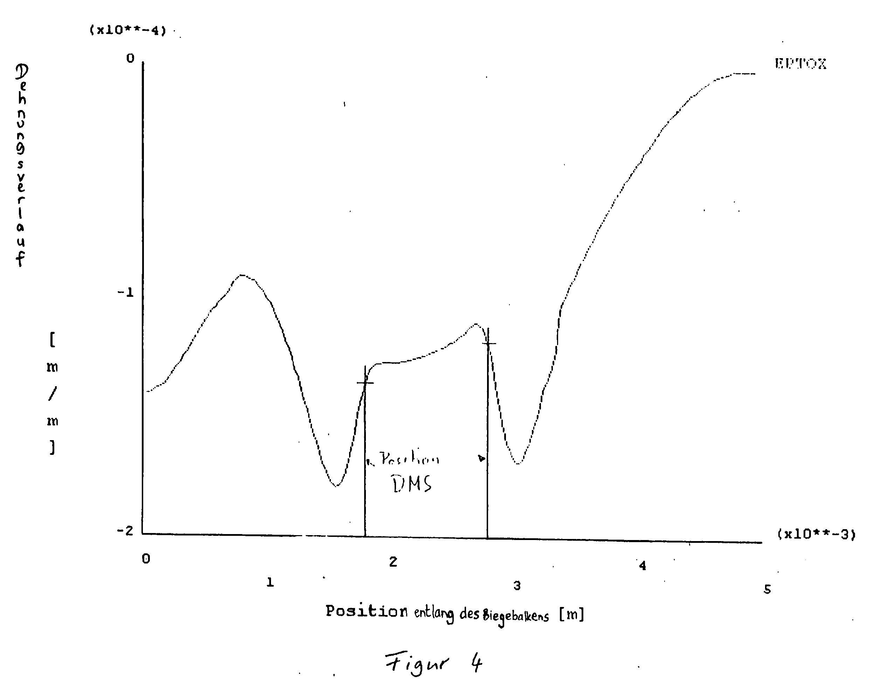

Fig.4 zeigt den erwarteten Dehnungsverlauf entlang des Biegelbalkens bei einem Temperatursprung von 100°C ohne Druck. Man erwartet ein Signal von ca. 1,6 x 10⁻⁵ Dehnung, also nur ca. 0,8 % des Signals bei vollem Druck. Dies zeigt die Wirksamkeit der Temperaturkompensation.

Praktische Versuche haben diese errechneten Werte voll bestätigt.

## Patentansprüche

1. Drucksensor mit einer an einem ortsfesten Stützelement (1) abgestützten druckaufnehmenden Membran (2), einem sich mit der Auslenkung eines Auslenkbereichs der druckaufnehmenden Membran (2) verbiegenden Biegeelement (6), dessen Verbiegung in ein verarbeitbares Signal umwandelbar ist, und einem Temperaturausgleichselement (4) zum Kompensieren von Verformungen bei Temperaturänderungen, wobei das Biegeelement (6) über das Temperaturausgleichselement (4) mit dem die druckaufnehmende Membran (2) abstützenden Stützelement (1) verbunden ist,
**dadurch gekennzeichnet,**
**dass** das Biegeelement (6) gegenüber der druckaufnehmenden Membran (2) aus unterschiedlichem Material mit unterschiedlichem Temperaturausdehnungskoeffizienten gebildet ist, und
**dass** das Temperaturausgleichselement ein zumindest bereichsweise flächenhaft ausgebildeter Körper (4) ist, der biegesteifer als die druckaufnehmde Membran (2) ausgebildet ist, aber ein gegenüber dem Biegeelement unterschiedliches Verformverhalten der druckaufnehmenden Membran (2) bei Temperaturänderung kompensiert.

2. Drucksensor nach Anspruch 1,
**dadurch gekennzeichnet,**
**dass** der flächenhafte Körper (4) aus einem Material mit gleichem Temperaturausdehnungskoeffizienten wie die druckaufnehmende Membran (2) gebildet ist.

3. Drucksensor nach einem der Ansprüche 1 oder 2,
**dadurch gekennzeichnet,**
**dass** der flächenhafte Körper (4) in seinem flächenhaften Bereich eine Wellenform aufweist.

4. Drucksensor nach einem der Ansprüche 1 bis 3,
**dadurch gekennzeichnet,**
**dass** der flächenhafte Körper durch eine zweite Membran (4) gebildet ist.

5. Drucksensor nach einem der Ansprüche 1 bis 4,
**dadurch gekennzeichnet,**
**dass** der flächenhafte Körper (4) wenigstens 10mal biegesteifer als die druckaufnehmende Membran (2) ist.

6. Drucksensor nach einem der Ansprüche 1 bis 5,
**dadurch gekennzeichnet,**
**dass** das Biegeelement (6) auf einem zweiten Stützelement (5) abgestützt befestigt ist, das wiederum an einem ersten Randbereich des flächenhaften Körper (4) befestigt ist, der mit einem zweiten Randbereich an dem ersten Stützelement (1), welches auch die druckaufnehmende Membran (2) trägt, befestigt ist.

7. Drucksensor nach Anspruch 2 und Anspruch 6,
**dadurch gekennzeichnet,**
**dass** der flächenhafte Körper (4), die druckaufnehnmde Membran (2), das erste oder beide der Stützelemente (1) und ein Verbindungselement (3), das den Auslenkbereich mit dem Biegeelement (6) verbindet, aus Materialien mit gleichen Temperaturausdehnungskoeffizienten, vorzugsweise aus dem gleichen, gegenüber aggressiven zu messenden Medien unempfindlichen, Material, gebildet sind, und das Biegeelement (6) aus einem
Material mit unterschiedlichem Temperaturausdehnungskoeffizienten gebildet ist.

8. Drucksensor nach Anspruch 7,
**dadurch gekennzeichnet,**
**dass** der flächenhafte Körper (4), die druckaufnehmende Membran (2), das erste oder beide der Stützelemente (1, 5) und das Verbindungselement aus austenitischem Edelstahl und das Biegelement (6) aus martensitischem Stahl bestehen.

9. Drucksensor nach einem der Ansprüche 1 bis 5,
**dadurch gekennzeichnet,**
**dass** lediglich die druckaufnehmde Membran (2) und gegebenenfalls noch das erste Stützelement (1) aus Titan oder einer Titanlegierung besteht und die übrigen Elemente (3 - 6) des Drucksensors aus anderen Materialien bestehen, vorzugsweise derart, dass der flächenhafte Körper (4) aus einem Material mit gleichem Temperaturausdehnungskoeffizienten wie das Titanmaterial besteht.

10. Drucksensor nach einem der Ansprüche 1 bis 9,
**dadurch gekennzeichnet,**
**dass** das Biegeelement (6) durch einen Biegebalken (6) mit dickeren Enden zur ortsfesten Befestigung und einem verdickten Mittelteil zur Verbindung mit dem Verbindungselement (3) sowie dünneren Biegebereichen zwischen den Enden und dem Mittelteil gebildet ist, wobei die Biegebereiche mit Dehnmessstreifen versehen sind.

11. Drucksensor nach einem der Ansprüche 1 bis 10,
**dadurch gekennzeichnet,**
**dass** er zur frontbündigen Anordnung in einer das zu vermessende Medium umgebenden Wand ausgebildet ist.

12. Drucksensor nach einem der Ansprüche 1 bis 11,
**dadurch gekennzeichnet,**
**dass** der flächenhafte Körper (4) sich in einer zu der druckaufnehmenden Membran (2) im wesentlichen parallelen Richtung erstreckend angeordnet ist.

## Claims

1. Pressure sensor comprising a pressure-receiving membrane (2) supported on a stationary supporting element (1), a bending element (6) which deforms with the deflection of a deflection zone of the pressure-receiving diaphragm (2), the deformation of said bending element being transformable to a processed signal, and a temperature compensation element (4) for compensating deformations during temperature changes, wherein said bending element (6) is connected to the supporting element (1) supporting said pressure-receiving membrane, via said temperature compensation element (4),
**characterized in**
**that** the bending element (6) is formed of a material different from the pressure-receiving membrane and having a different temperature expansion coefficient, and that the temperature compensation element is a body (4) which is at least partially formed two-dimensional, said body being more resistant to bending than the pressure-receiving membrane (2), but compensating a deformation behaviour of the pressure-receiving membrane which is different compared to the bending element during temperature changes.

2. Pressure sensor according to claim 1,
**characterized in**
**that** said two-dimensional body (4) is formed of a material having the same temperature expansion coefficient as the pressure-receiving membrane (2).

3. Pressure sensor according to one of the claims 1 or 2,
**characterized in**
**that** said two-dimensional body (4) includes a wave-shape in its two-dimensional region.

4. Pressure sensor according to one of the claims 1 to 3,
**characterized in**
**that** said two-dimensional body (4) is formed by a second membrane.

5. Pressure sensor according to one of the claims 1 to 4,
**characterized in**
**that** said two-dimensional body (4) is at least ten times more bending-resistant that the pressure-receiving membrane (2).

6. Pressure sensor according to one of the claims 1 to 5,
**characterized in**
**that** the bending element (6) is fixed supported on a second supporting element (5) which is fixed in turn to a first rim portion of the two-dimensional body (4) which by a second rim portion is fixed to the first supporting element (1) which also carries the pressure-receiving membrane.

7. Pressure sensor according to claim 2 and claim 6,
**characterized in**
**that** the two-dimensional body (4), the pressure-receiving membrane (2), the first or both supporting elements (1, 5) and a connecting element (3) which interconnects the deflection zone and the bending element (6) are formed of materials having the same temperature expansion coefficient, preferably of the same material which is insensitive to aggressive media to be measured, and that the bending element (6) is formed of a material having a different temperature expansion coefficient.

8. Pressure sensor according to claim 2 and claim 6,
**characterized in**
**that** the two-dimensional body (4), the pressure-receiving membrane (2), the first or both supporting elements (1, 5) and the connecting element (3) consist of austenite special steel and that the bending element (6) consists of martensitic steel.

9. Pressure sensor according to one of the claims 1 to 5,
**characterized in**
**that** only the pressure-receiving membrane and in case additionally the first supporting element (1) consist of titanium or a titanium alloy and the remaining elements (3 - 6) of the pressure sensor consist of other materials, preferably such that the two-dimensional body (4) consists of a material having the same temperature expansion coefficient as the titanium material.

10. Pressure sensor according to one of the claims 7 to 9,
**characterized in**
**that** the bending element (6) is formed by a bending beam (6) having thicker ends for the stationary fixing and a thickened middle part for the connection to the connecting element (3) as well as thinner bending parts between the ends and the middle part, wherein said bending portions are provided with wire strain gauges.

11. Pressure sensor according to one of the claims 1 to 10,
**characterized in**
**that** for an arrangement flush with the front, said pressure sensor is formed in a wall surrounding the medium to be measured.

12. Pressure sensor according to one of the claims 1 to 11,
**characterized in**
**that** the two-dimensional body (4) extends in a direction substantially parallel to the pressure-receiving membrane.

## Revendications

1. Détecteur de pression avec une membrane recevant de pression (2) et supportée sur un élément de support stationnaire (1), un élément de flexion (6) qui se déforme avec l'excursion d'une zone d'excursion de la membrane recevant de pression (2), la déformation duquel élément peut être transformée en un signale traité, et avec un élément pour la compensation de température (4) pour compenser des déformations pendant des changes de température, l'élément de flexion (6) étant relié à l'élément de support (1) supportant la membrane recevant de pression (2) par l'élément pour la compensation de température (4),
**caractérisé en ce que**
l'élément de flexion (6) est formé d'un matériau différent duquel de la membrane recevant de pression (2) et a un coefficient de dilatation de température différent, et **en ce que** l'élément pour la compensation de température est un corps (4) en forme bidimensionnel au moyen en parties, mais compense un comportement de déformation différent de la membrane recevant de pression (2) vis à vis l'élément de flexion.

2. Détecteur de pression selon la revendication 1,
**caractérisé en ce que**
le corps bidimensionnel (4) est formé d'un matériau ayant le même coefficient de dilatation de température que la membrane recevant de pression (2).

3. Détecteur de pression selon l'une des revendications 1 ou 2,
**caractérisé en ce que**
le corps bidimensionnel (4) a dans sa zone bidimensionnel une forme d'onde.

4. Détecteur de pression selon l'une des revendication 1 à 3,
**caractérisé en ce que**
le corps bidimensionnel (4) est formé par une seconde membrane (4).

5. Détecteur de pression selon l'une des revendication 1 à 4,
**caractérisé en ce que**
le corps bidimensionnel (4) est dix fois plus résistant à la flexion que la membrane recevant de pression (2).

6. Détecteur de pression selon l'une des revendication 1 à 5,
**caractérisé en ce que**
l'élément de flexion (6) est fixé d'une façon supporté sur un second élément de support, qui lui est fixé sur une première zone de bord du corps bidimensionnel (4) qui est fixée par une deuxième zone de bord sur le premier élément de support (1) qui porte la membrane recevant de pression.

7. Détecteur de pression selon les revendications 2 et 6,
**caractérisé en ce que**
le corps bidimensionnel (4), la membrane recevant de pression (2), le premier ou les deux éléments de support (1, 5) et un élément de liaison (3) reliant la zone de déformation à l'élément de flexion (6) sont formés en matériaux ayant la même coefficient de dilatation de température, de préférence en un même matériau qui est insensible aux milieux agressifs à mesurer, et que l'élément de flexion (6) est formé en un matériau ayant un coefficient de dilatation de température différent.

8. Détecteur de pression selon la revendication 7,
**caractérisé en ce que**
le corps bidimensionnel (4), la membrane recevant de pression (2), le premier ou les deux éléments de support (1, 5) et un élément de liaison (3) consistent en acier spécial austénitique et que l'élément de déformation (6) consiste en acier martensitique.

9. Détecteur de pression selon les revendications 2 et 6,
**caractérisé en ce que**
seulement la membrane recevant de pression (2) et en cas aussi le premier élément de support (1) consistent en titane ou en un alliage de titane et que les autres éléments (3 - 6) du détecteur de pression consistent en autres matériaux, de préférence d'une façon que le corps (4) consiste en un matériau ayant le même coefficient de dilatation de température que le matériau titane.

10. Détecteur de pression selon l'une des revendications 7 à 9,
**caractérisé en ce que**
l'élément de flexion (6) est formé par une barre de flexion (6) avec des extrémités plus épais pour la fixation stationnaire et par une partie moyenne plus épais pour la liaison avec l'élément de liaison (3) ainsi que par des parties plus minces entre les extrémités et la partie moyenne, les zones de déformation étant pourvues des extensomètres à fil d'acier.

11. Détecteur de pression selon l'une des revendications 1 à 10,
**caractérisé en ce que**,
pour l'arrangement franc-bord, lui est formé dans une paroi entourant le milieu à mesurer.

12. Détecteur de pression selon l'une des revendications 1 à 11,
**caractérisé en ce que**
le corps bidimensionnel (4) est arrangé dans une direction essentiellement parallèle à la membrane recevant de pression (2).
